# EUROPEAN PATENT SPECIFICATION

(11) **EP 4 503 508 B1**
(45) Date of publication and mention of the grant of the patent: **02.09.2026**
(21) Application number: 24188289.3
(22) Date of filing: 12.07.2024
(51) Int. Cl.: H04L 9/32, H04L 9/08

(54) **CODEPENDENT PHYSICAL UNCLONABLE FUNCTION/RANDOM NUMBER GENERATOR PAIRING FOR PHYSICAL PROVENANCE**
GEMEINSAME PAARUNG VON PHYSIKALISCH UNKLONBARER FUNKTION/ZUFALLSZAHLENGENERATOR FÜR PHYSISCHE HERKUNFT
APPARIEMENT DE FONCTION PHYSIQUE NON CLONABLE/GÉNÉRATEUR DE NOMBRES ALÉATOIRES CO-DÉPENDANTS POUR LA PROVENANCE PHYSIQUE

(30) Priority: 01.08.2023 US 202363516949 P; 10.05.2024 US 202418661400
(43) Date of publication of application: 05.02.2025
(73) Proprietor: Honeywell International Inc., Charlotte, NC 28202 (US)
(72) Inventor: TUCKER, James L., Charlotte, NC 28202 (US); HEFFNER, Kenneth H., Charlotte, NC 28202 (US); COUSSEAU, Peter L., Charlotte, NC 28202 (US); HORKHEIMER, Donald Patrick, Charlotte, NC 28202 (US)
(74) Representative: Haseltine Lake Kempner LLP

(56) References cited:
- US-A1- 2017 149 572
- BUCHOVECKÁ SIMONA ET AL: "True random number generator based on ring oscillator PUF circuit", MICROPROCESSORS AND MICROSYSTEMS, IPC BUSINESS PRESS LTD. LONDON, GB, vol. 53, 4 July 2017 (2017-07-04), pages 33 - 41, XP085168406, ISSN: 0141-9331, DOI: 10.1016/J.MICPRO.2017.06.021
- GENG ZHENG ET AL: "True Random Number Generator Based on Ring Oscillator PUFs", MULTIMEDIA SYSTEMS AND SIGNAL PROCESSING, ACM, 2 PENN PLAZA, SUITE 701NEW YORKNY10121-0701USA, 13 August 2017 (2017-08-13), pages 1 - 5, XP058380886, ISBN: 978-1-4503-5314-4, DOI: 10.1145/3145511.3145518
- VINCENT VAN DER LEEST ET AL: "Efficient Implementation of True Random Number Generator Based on SRAM PUFs", 1 January 2012, CRYPTOGRAPHY AND SECURITY: FROM THEORY TO APPLICATIONS, SPRINGER BERLIN HEIDELBERG, BERLIN, HEIDELBERG, PAGE(S) 300 - 318, ISBN: 978-3-642-28367-3, XP019173518
- HOLCOMB D E ET AL: "Power-Up SRAM State as an Identifying Fingerprint and Source of True Random Numbers", IEEE TRANSACTIONS ON COMPUTERS, IEEE, USA, vol. 58, no. 9, 1 September 2009 (2009-09-01), pages 1198 - 1210, XP011266890, ISSN: 0018-9340, DOI: 10.1109/TC.2008.212
- BEDEKAR NEEL ET AL: "A Novel Approach to True Random Number Generation in Wearable Computing Environments Using MEMS Sensors", 28 March 2015, ADVANCES IN VISUAL COMPUTING : 16TH INTERNATIONAL SYMPOSIUM, ISVC 2021, VIRTUAL EVENT, OCTOBER 4-6, 2021, PROCEEDINGS, PART II; [LECTURE NOTES IN COMPUTER SCIENCE], SPRINGER INTERNATIONAL PUBLISHING, CHAM, PAGE(S) 530 - 546, ISBN: 978-3-030-90436-4, ISSN: 0302-9743, XP047653645

## Description

### BACKGROUND

Systems that can provide assurance as to both the identity of hardware and the sustained quality of the randomness of the sources within the systems are needed for cryptography. These systems must both validate the identity of hardware and provide a truly random source of numbers embedded within the system. One threat vector for attackers to circumvent the cryptographic measures of such systems is for the attacker to disable or replace the random source (for example, with a pseudo random number source) such that the random number becomes known and hence other variables can be targeted for compromise. Pseudo random sequences can often spoof the best random number checkers implemented during runtime. Systems should be capable of resisting methods that would seek to divide and conquer by separating the system into parts and attacking the parts.
Reference may be made to BUCHOVECKA SIMONA ET AL: "True random number generator based on ring oscillator PUF circuit", MICROPROCESSORS AND MICROSYSTEMS, IPC BUSINESS PRESS LTD. LONDON, vol. 53, pages 33-41.
Reference may be made to GENG ZHENG ET AL: "True Random Number Generator Based on Ring Oscillator PUFs", MULTIMEDIA SYSTEMS AND SIGNAL PROCESSING, ACM, 13 August 2017, pages 1-5.
Reference may be made to VINCENT VAN DER LEEST ET AL: "Efficient Implementation of True Random Number Generator Based on SRAM PUFs", 1 January 2012, CRYPTOGRAPHY AND SECURITY: FROM THEORY TO APPLICATIONS, SPRINGER BERLIN HEIDELBERG, PAGE(S) 300 - 318, ISBN: 978-3-642-28367-3.
Reference may be made to HOLCOMB D E ET AL: "Power-Up SRAM State as an Identifying Fingerprint and Source of True Random Numbers",IEEE TRANSACTIONS ON COMPUTERS, vol. 58, no. 9, pages 1198-1210.
Reference may be made to US 2017/149572 A1, which relates to an authenticatable device with reconfigurable physical unclonable functions.
Reference may be made to BEDEKAR NEEL ET AL: "A Novel Approach to True Random Number Generation in Wearable Computing Environments Using MEMS Sensors", 28 March 2015 ADVANCES IN VISUAL COMPUTING: 16TH INTERNATIONAL SYMPOSIUM, ISVC 2021, ISBN: 978-3-030-90436-4.

### SUMMARY

In some aspects, a device is described herein. The device includes physical unclonable function (PUF) circuitry configured to produce a PUF output in response to an input. The device further includes random number generator (RNG) circuitry configured to output one or more random numbers. The PUF circuitry and the RNG circuitry share one or more components such that an alteration of the RNG circuitry alters the PUF circuitry. The device is configured to determine whether the RNG circuitry is an untainted source of random numbers based on an output of the PUF circuitry.

In some aspects, a node is described herein. The node includes a physical unclonable function (PUF) circuit configured to produce a PUF output in response to an input. The node further includes a random number generator (RNG) circuit configured to output one or more random numbers. The PUF circuit and the RNG circuit share one or more components such that an alteration of the RNG circuit alters the PUF circuit. The node further includes one or more additional circuits configured to utilize the PUF output and/or the one or more random numbers for one or more cryptographic processes. The node is configured to determine whether the RNG circuit is an untainted source of random numbers based on an output of the PUF circuit.

In some examples, a method is described herein. The method includes receiving a physical unclonable function (PUF) challenge at a device including PUF circuitry and random number generator (RNG) circuitry that share one or more components. The method further includes determining, with the PUF circuitry of the device, a PUF response output in response to the PUF challenge. The method further includes determining whether the PUF response output matches a valid PUF response. The method further includes, in response to a determination that the PUF response output matches a valid PUF response, validating one or more hardware resources for the RNG circuitry. The method further includes, in response to a determination that the PUF response output does not match a valid PUF response, rejecting one or more hardware resources for the RNG circuitry.

### BRIEF DESCRIPTION OF THE DRAWINGS

Understanding that the drawings depict only some embodiments and are not therefore to be considered limiting in scope, the exemplary embodiments will be described with additional specificity and detail using the accompanying drawings, in which:
FIGS. 1A-1E are block diagrams of example devices with a codependent physical unclonable function (PUF) and random number generator (RNG);
FIG. 2 is a flow diagram of an example method of verifying randomness of the random number generator (RNG) included in a combined PUF/RNG device; and
FIG. 3 is a block diagram of an example system.

In accordance with common practice, the various described features are not drawn to scale but are drawn to emphasize specific features relevant to the example embodiments.

### DETAILED DESCRIPTION

In the following detailed description, reference is made to the accompanying drawings that form a part hereof, and in which are shown by way of illustration specific illustrative embodiments. However, it is to be understood that other embodiments may be utilized, and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The examples described herein combine PUF circuitry and RNG circuitry in same device to avoid divide and conquer attacks. In the examples described herein, the PUF circuitry and the RNG circuitry share one or more components such that alteration of the RNG alters the PUF. The random number output of the device will be guaranteed to have good, non-deterministic output as long as the PUF output(s) remain consistent for a given challenge/response. Thus, if a valid PUF response is measured from the output of the PUF circuitry 102, this also validates and proves the randomness of the RNG circuitry 104. By using the combined PUF and RNG device architectures and the methods described herein, a more conclusive way to prove that the RNG output is from an untainted source by measuring the PUF output is provided.

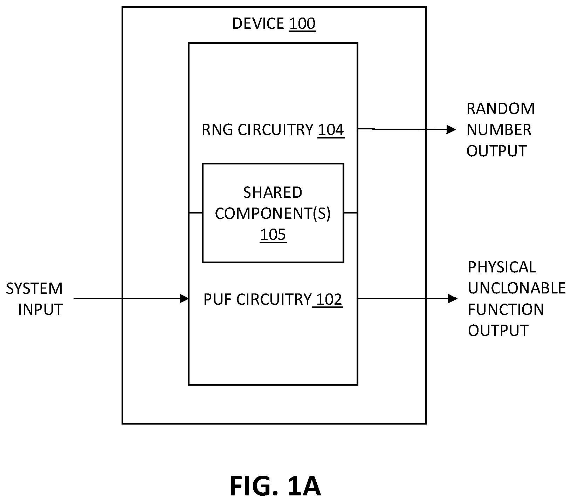

FIG. 1A is a block diagram of an example device 100 with a codependent physical unclonable function (PUF) and random number generator (RNG). The device 100 includes both PUF circuitry 102 and RNG circuitry 104 that are codependent such that alteration of the RNG circuitry 104 necessarily alters the PUF circuitry 102.

In the example shown in FIG. 1A, the PUF circuitry 102 is configured to receive a system input (for example, an input from a user). In some examples, the system input includes one or more challenges (for example, challenge bits), and the PUF circuitry 102 is configured to output a response to the one or more challenges. In the example shown in FIG. 1A, the PUF circuitry 102 is configured to produce a PUF output that corresponds to the response to the one or more challenges. The PUF circuitry 102 can be selected and configured to implement a variety of PUF architectures (for example, arbiter, ring oscillator, etc.) and can include a variety of different electronic components.

In the example shown in FIG. 1A, the RNG circuitry 104 is configured to output a random number based on physical characteristics of the RNG circuitry 104 among other factors. In some examples, the output of the RNG circuitry 104 is also based on noise inherent to the PUF circuitry 102, which can be provided to the RNG circuitry 104 by one or more components of the PUF circuitry 102 as a "seed" for the RNG circuitry 104. The output of the RNG circuitry 104 is random and non-deterministic. In some examples, the output of the RNG circuitry 104 is affected over time due to aging or other factors. The RNG circuitry 104 can be configured to implement a variety of RNG architectures (for example, ring oscillator, etc.) and can include a variety of different electronic components.

In the example shown in FIG. 1A, the PUF circuitry 102 and the RNG circuitry 104 share one or more components (shown as shared components 105) such that modifying the shared components 105 results in a change to the PUF circuitry 102 and thus the PUF output. The types of components that are shared between the PUF circuitry 102 and the RNG circuitry 104 depend on the types of components used to implement the PUF circuitry 102 and the RNG circuitry 104. Further, the particular number of the shared components 105 and the identity of the shared components 105 that is sufficient to guarantee that an alteration made to the RNG circuitry 104 will result in an alteration to the PUF circuitry 102 varies depending on the types of components used to implement the PUF circuitry 102 and the RNG circuitry 104.

In some examples, the PUF circuitry 102 and the RNG circuitry 104 are both implemented using only active transistor circuitry. In such examples, the PUF circuitry 102 includes active transistor PUF circuitry and the RNG circuitry 104 includes active transistor RNG circuitry, and one or more components of the active transistor PUF circuitry are shared with the active transistor RNG circuitry.

In some examples, the active transistor PUF circuitry can include, but is not limited to, circuitry that is configured to produce a corresponding PUF response based on a particular PUF challenge that is input to the system. For example, if the active transistor PUF circuitry is configured to implement a ring oscillator PUF, the active transistor PUF circuitry can include an array of ring oscillator loops coupled to multiplexers, frequency counters, comparison circuitry, and the like.

In some examples, the active transistor RNG circuitry can include, but is not limited to, circuitry that is configured to produce random numbers. In some examples, the active transistor RNG circuitry can include, but is not limited to, an array of ring oscillator loops coupled to an exclusive or component (XOR), sampling circuitry, and the like.

In the examples above for the active transistor PUF circuitry and the active transistor RNG circuitry, ring oscillator loops and/or inverters can be shared between the PUF circuitry 102 and the RNG circuitry 104. It should be understood that other components not specifically described above could also be shared between the PUF circuitry 102 and the RNG circuitry 104.

In examples where the PUF circuitry 102 is implemented using only active transistor circuitry, the uniqueness of the PUF outputs is impacted by the noise and uncontrollable factors inherent in the materials of construction, fabrication processes, etc. for the activate transistor circuitry components. In examples where the RNG circuitry 104 is implemented using only active transistor circuitry, the randomness of the random number output is impacted by the number of components (for example, more ring oscillator loops can increase randomness), variation between the components (for example, different length ring oscillator loops), noise (for example, due to fabrication processes), etc. for the active transistor circuitry components. In some examples, the randomness of the random number output is also impacted by the noise and/or uncontrollable factors inherent in the PUF circuitry 102 (for example, where the noise from the PUF circuitry 102 is used as a seed for the RNG circuitry 104).

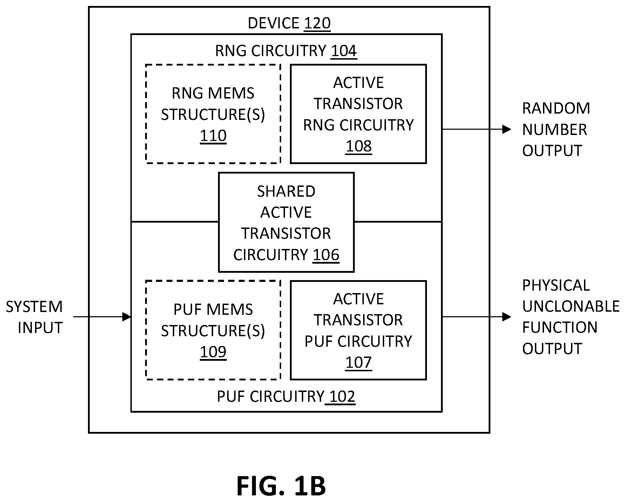

In some examples, such as the example devices 120, 130, 140, 150 described below with respect to FIGS. 1B-1E, the PUF circuitry 102 and/or the RNG circuitry 104 are implemented using a combination of one or more MEMS structures and active transistor circuitry. In some examples, the one or more MEMS structures includes a single MEMS sensor. In other examples, the one or more MEMS structures includes a plurality of MEMS structures. The one or more MEMS structures may be any type of MEMS device such as an accelerometer, a gyroscope, a pressure sensor, a temperature sensor, airflow sensor or other similar MEMS structures. When included in the PUF circuitry 102, the one or more MEMS structures can function as a further source of uniqueness for the active transistor PUF circuitry. When included in the RNG circuitry 104, the parasitic resistance, capacitance, and/or inductance of the one or more MEMS sensors can function as a further entropy source for the active transistor RNG circuitry. It should be understood that other sources of entropy in addition to, or instead of, the one or more MEMS structures can also be used. For example, noise and/or uncontrollable factors inherent in the PUF circuitry 102, a capacitor structure, resistor structure, light detector, light detector/emitter pair (for example, using diodes), or other types of sources could also be used as source of entropy for the RNG circuitry 104.

In some comparative examples, the PUF circuitry 102 includes only active transistor circuitry whereas the RNG circuitry 104 includes one or more MEMS structures and active transistor circuitry. In other comparative examples, the PUF circuitry 102 includes one or more MEMS structures and active transistor circuitry whereas the RNG circuitry 104 includes only active transistor circuitry. In either of these other comparative examples, the PUF circuitry 102 and the RNG circuitry 104 share one or more components of the active transistor circuitry, but not the one or more MEMS structures.

In other examples, both the PUF circuitry 102 and the RNG circuitry 104 include active transistor circuitry and one or more MEMS structures. In such examples, the PUF circuitry 102 and the RNG circuitry 104 share one or more MEMS structures (embodying the present invention) and/or one or more components of the active transistor circuitry. It will be understood that in embodiments the PUF circuitry 102 and the RNG circuitry 104 share one or more components including one or more MEMS structures.

In examples where the PUF circuitry 102 is implemented using a combination of one or more MEMS structures and active transistor circuitry, the uniqueness of the PUF outputs is impacted by the noise and uncontrollable factors inherent in the materials of construction, fabrication processes, etc. of the active transistor circuitry and the one or more MEMS structures. In examples where the RNG circuitry 104 is implemented using a combination of one or more MEMS structures and active transistor circuitry, the randomness of the random number output is impacted by the number of components (for example, more ring oscillator loops or MEMS structures), variation between the components (for example, different length ring oscillator loops or variation between similar MEMS structures), noise (for example, due to fabrication processes), etc. of the active transistor circuitry and the one or more MEMS structures. In some examples, the randomness of the random number output is also impacted by the noise and/or uncontrollable factors inherent in the PUF circuitry 102 (for example, where the noise from the PUF circuitry 102 is used as a seed for the RNG circuitry 104). In general, the uniqueness of the PUF output and the randomness of the random number output is increased when using one or more MEMS structures in addition to the active transistor circuitry.

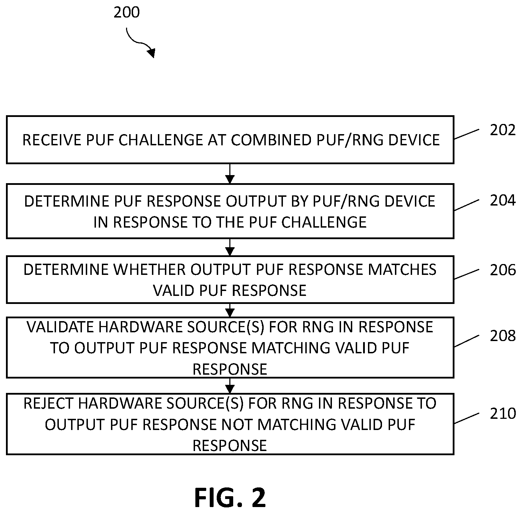

As discussed above, the PUF circuitry 102 and RNG circuitry 104 of the device 100 are codependent such that alteration of the RNG circuitry 104 necessarily alters the PUF circuitry 102. In the example shown in FIG. 1A, the codependency is produced by the shared components 105. In particular, any modification of the RNG circuitry 104 of the device 100 necessarily requires modification to the shared components 105 and such a modification would result in a change to the PUF circuitry 102 and the RNG circuitry 104. By testing the PUF output (for example, as discussed below with respect to FIG. 2), a system that includes the device 100 can verify whether the RNG circuitry 104 is an untainted source of random numbers.

FIG. 1B is a block diagram of an example device 120 with a codependent physical unclonable function (PUF) and random number generator (RNG). The particular features of the device 120 represent an embodiment of the device 100 described above with respect to FIG. 1A. In the example shown in FIG. 1B, the device 120 includes PUF circuitry 102 and RNG circuitry 104, which both include shared active transistor circuitry 106.

In the example shown in FIG. 1B, the PUF circuitry 102 includes active transistor PUF circuitry 107 in addition to the shared active transistor circuitry 106. As opposed to the shared active transistor circuitry 106, the active transistor PUF circuitry 107 is exclusively used for the PUF circuitry 102. For example, the active transistor PUF circuitry 107 can include, but is not limited to, circuitry used to implement the reception of the challenge inputs, frequency counters, or other circuit elements unique to the operation of the PUF circuitry 102.

In some examples, the PUF circuitry 102 optionally includes one or more PUF MEMS structures 109 in addition to the shared active transistor circuitry 106 and the active transistor PUF circuitry 107. In comparative examples, the one or more PUF MEMS structures 109 are used exclusively for the PUF circuitry 102. In such examples, the one or more PUF MEMS structures 109, if included, are used as a further source of uniqueness in combination with the shared active transistor circuitry 106 and/or the active transistor PUF circuitry 107.

In the example shown in FIG. 1B, the RNG circuitry 104 includes active transistor RNG circuitry 108 in addition to the shared active transistor circuitry 106. As opposed to the shared active transistor circuitry 106, the active transistor RNG circuitry 108 is exclusively used for the RNG circuitry 104. For example, the active transistor RNG circuitry 108 can include, but is not limited to, circuitry used to implement the sample clock, XOR functionality, or other circuit elements unique to the operation of the RNG circuitry 104.

In some examples, the RNG circuitry 104 optionally includes one or more RNG MEMS structures 110 in addition to the shared active transistor circuitry 106 and the active transistor RNG circuitry 108. In comparative examples, the one or more RNG MEMS structures 110 are used exclusively for the RNG circuitry 104. In such examples, the parasitic resistance, capacitance, and/or inductance of the one or more RNG MEMS structures 110 is combined with the active logic implemented using the active transistor RNG circuitry 108 to increase the entropy. It should be understood that other sources of entropy in addition to, or instead of, the one or more RNG MEMS structures 110 can also be used. For example, noise and/or uncontrollable factors inherent in the PUF circuitry 102, a capacitor structure, resistor structure, light detector, light detector/emitter pair (for example, using diodes), or other types of sources could also be used as source of entropy for the RNG circuitry 104.

The PUF circuitry 102 and RNG circuitry 104 of the device 120 are codependent such that alteration of the RNG circuitry 104 necessarily alters the PUF circuitry 102. In the example shown in FIG. 1B, the codependency is produced by the shared active transistor circuitry 106. In particular, any modification of the RNG circuitry 104 of the device 120 necessarily requires modification to the shared active transistor circuitry 106 and such a modification would result in a change to both the PUF circuitry 102 and the RNG circuitry 104. By testing the PUF output (for example, as discussed below with respect to FIG. 2), a system that includes the device 120 can verify whether the RNG circuitry 104 is an untainted source of random numbers.

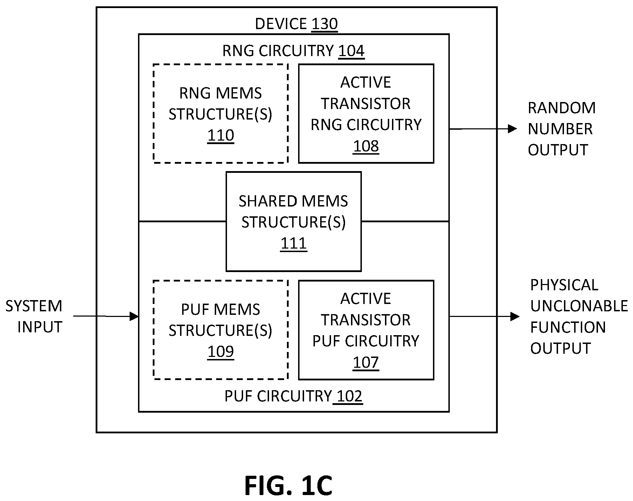

FIG. 1C is a block diagram of another example device 130 with a codependent physical unclonable function (PUF) and random number generator (RNG). The particular features of the device 130 represent another embodiment of the device 100 described above with respect to FIG. 1A.

In the example shown in FIG. 1C, the device 130 includes PUF circuitry 102, which is implemented using a combination of one or more MEMS structures and active transistor circuitry. In the example shown in FIG. 1C, the device 130 also includes RNG circuitry 104, which is implemented using a combination of one or more MEMS structures and active transistor circuitry. In the example shown in FIG. 1C, the PUF circuitry 102 and the RNG circuitry 104 include one or more shared MEMS structures 111 instead of the shared active transistor circuitry 106.

In the example shown in FIG. 1C, the PUF circuitry 102 includes active transistor PUF circuitry 107 in addition to the one or more shared MEMS structures 111. The active transistor PUF circuitry 107 is exclusively used for the PUF circuitry 102. For example, the active transistor PUF circuitry 107 can include, but is not limited to, circuitry used to implement the reception of the challenge inputs, frequency counters, or other circuit elements unique to the operation of the PUF circuitry 102.

In some examples, the PUF circuitry 102 optionally includes one or more PUF MEMS structures 109 in addition to the one or more shared MEMS structures 111 and the active transistor PUF circuitry 107. As opposed to the one or more shared MEMS structures 111, the one or more PUF MEMS structures 109 are exclusively used for the PUF circuitry 102. In such examples, the one or more shared MEMS structures 111 and the one or more PUF MEMS structures 109, if included, are used as a further source of uniqueness for the active transistor PUF circuitry 107.

In the example shown in FIG. 1C, the RNG circuitry 104 includes active transistor RNG circuitry 108 in addition to the one or more shared MEMS structures 111. The active transistor RNG circuitry 108 is exclusively used for the RNG circuitry 104. For example, the active transistor RNG circuitry 108 can include, but is not limited to, circuitry used to implement the sample clock, XOR functionality, or other circuit elements unique to the operation of the RNG circuitry 104.

In some examples, the RNG circuitry 104 optionally includes one or more RNG MEMS structures 110 in addition to the one or more shared MEMS structures 111. As opposed to the one or more shared MEMS structures 111, the one or more RNG MEMS structures 110 are exclusively used for the RNG circuitry 104. In such examples, the parasitic resistance, capacitance, and/or inductance of the one or more shared MEMS structures 111 and the parasitic resistance, capacitance, and/or inductance of the one or more RNG MEMS structures 110 are combined with the active logic implemented using the active transistor RNG circuitry 108.

The PUF circuitry 102 and RNG circuitry 104 of the device 130 are codependent such that alteration of the RNG circuitry 104 necessarily alters the PUF circuitry 102. In the example shown in FIG. 1C, the codependency is produced by the one or more shared MEMS structures 111. In particular, any modification of the RNG circuitry 104 of the device 130 necessarily requires modification to the one or more shared MEMS structures 111 and such a modification would result in a change to both the PUF circuitry 102 and the RNG circuitry 104. By testing the PUF output (for example, as discussed below with respect to FIG. 2), a system that includes the device 130 can verify whether the RNG circuitry 104 is an untainted source of random numbers.

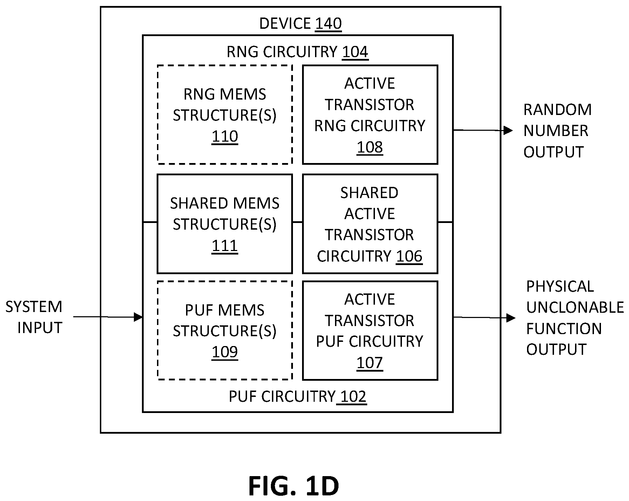

FIG. 1D is a block diagram of an example device 140 with a codependent physical unclonable function (PUF) and random number generator (RNG). The particular features of the device 140 represent an embodiment of the device 100 described above with respect to FIG. 1A.

In the example shown in FIG. 1D, the device 140 includes PUF circuitry 102, which is implemented using a combination of one or more MEMS structures and active transistor circuitry. In the example shown in FIG. 1D, the device 140 also includes RNG circuitry 104, which is implemented using a combination of one or more MEMS structures and active transistor circuitry. In the example shown in FIG. 1D, the PUF circuitry 102 and the RNG circuitry 104 both include shared active transistor circuitry 106 and one or more shared MEMS structures 111.

In the example shown in FIG. 1D, the PUF circuitry 102 includes active transistor PUF circuitry 107 in addition to the shared active transistor circuitry 106. As opposed to the shared active transistor circuitry 106, the active transistor PUF circuitry 107 is exclusively used for the PUF circuitry 102. For example, the active transistor PUF circuitry 107 can include, but is not limited to, circuitry used to implement the reception of the challenge inputs, frequency counters, or other circuit elements unique to the operation of the PUF circuitry 102.

In some examples, the PUF circuitry 102 optionally includes one or more PUF MEMS structures 109 in addition to the shared active transistor circuitry 106, the active transistor PUF circuitry 107, and the one or more shared MEMS structures 111. As opposed to the one or more shared MEMS structures 111, the one or more PUF MEMS structures 109 are exclusively used for the PUF circuitry 102. In such examples, the one or more PUF MEMS structures 109 and/or the one or more shared MEMS structures 111 are used as a source of uniqueness for the shared active transistor circuitry 106 and/or the active transistor PUF circuitry 107.

In the example shown in FIG. 1D, the RNG circuitry 104 includes active transistor RNG circuitry 108 in addition to the shared active transistor circuitry 106. As opposed to the shared active transistor circuitry 106, the active transistor RNG circuitry 108 is exclusively used for the RNG circuitry 104. For example, the active transistor RNG circuitry 108 can include, but is not limited to, circuitry used to implement the sample clock, XOR functionality, or other circuit elements unique to the operation of the RNG circuitry 104.

In some examples, the RNG circuitry 104 optionally includes one or more RNG MEMS structures 110 in addition to the shared active transistor circuitry 106, the active transistor RNG circuitry 108, and the one or more shared MEMS structures 111. As opposed to the one or more shared MEMS structures 111, the one or more RNG MEMS structures 110 are exclusively used for the RNG circuitry 104. In such examples, the parasitic resistance, capacitance, and/or inductance of the one or more shared MEMS structures 111 and the parasitic resistance, capacitance, and/or inductance of the one or more RNG MEMS structures 110 are combined with the active logic implemented using the shared active transistor circuitry 106 and/or the active transistor RNG circuitry 108.

The PUF circuitry 102 and RNG circuitry 104 of the device 140 are codependent such that alteration of the RNG circuitry 104 necessarily alters the PUF circuitry 102. In the example shown in FIG. 1D, the codependency is produced by the shared active transistor circuitry 106 and/or the one or more shared MEMS structures 111. In particular, any modification of the RNG circuitry 104 of the device 140 necessarily requires modification to the shared active transistor circuitry 106 and/or the one or more shared MEMS structures 111. Such a modification would result in a change to both the PUF circuitry 102 and the RNG circuitry 104. By testing the PUF output (for example, as discussed below with respect to FIG. 2), a system that includes the device 140 can verify whether the RNG circuitry 104 is an untainted source of random numbers.

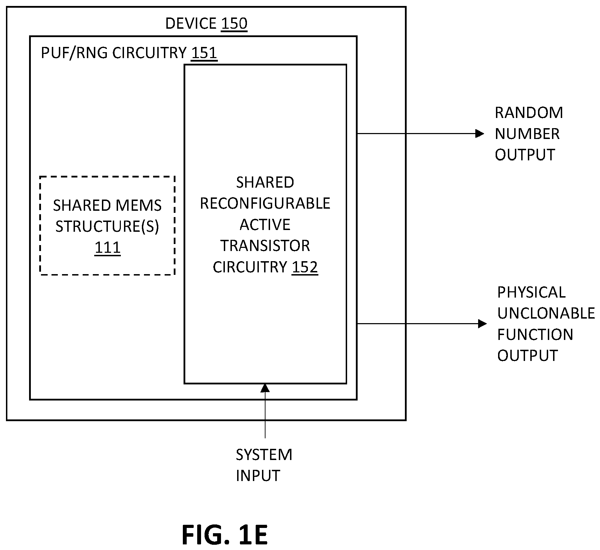

FIG. 1E is a block diagram of an example device 150 with a codependent physical unclonable function (PUF) and random number generator (RNG). The particular features of the device 150 represent an embodiment of the device 100 described above with respect to FIG. 1A.

In the example shown in FIG. 1E, the device 150 includes PUF/RNG circuitry 151, which is used to implement the PUF circuitry 102 and the RNG circuitry 104 as described above with respect to FIGS. 1A-1D. The PUF/RNG circuitry 151 is implemented using shared reconfigurable active transistor circuitry 152. In some examples, the shared reconfigurable active transistor circuitry 152 is implemented using a field-programmable gate array (FPGA) or other reconfigurable circuit elements.

In some examples, the shared reconfigurable active transistor circuitry 152 has multiple configuration states and only one configuration state is used at a particular time. The configuration states of the shared reconfigurable active transistor circuitry 152 include a PUF configuration configured to generate PUF outputs and an RNG configuration configured to generate RNG outputs. In some examples, the reconfigurable circuit elements (for example, of an FPGA) utilized for the PUF configuration are the same as those utilized for the RNG configuration. In some examples, the reconfigurable circuit elements (for example, of an FPGA) utilized for the PUF configuration included some, but not all, of the circuit elements utilized for the RNG configuration and vice versa.

In some examples, the configuration state of the shared reconfigurable active transistor circuitry 152 is determined based on a time-dependent sequence of operation where the PUF configuration is implemented during one or more periods of time and the RNG configuration is implemented during other periods of time. In other examples, the configuration state of the shared reconfigurable active transistor circuitry 152 is determined based on an input indicating the desired configuration state.

In some examples, the PUF/RNG circuitry 151 also includes one or more shared MEMS structures 111. In such examples, the parasitic resistance, capacitance, and/or inductance of the one or more shared MEMS structures 111 is combined with the active logic implemented using the shared reconfigurable active transistor circuitry 152 in a manner similar to that discussed herein.

The PUF/RNG circuitry 151 of the device 150 that implements the PUF circuitry 102 and the RNG circuitry 104 as discussed above with respect to FIGS. 1A-1D provides a codependent PUF and RNG such that alteration of the PUF/RNG circuitry 151 necessarily alters the PUF and RNG outputs. In the example shown in FIG. 1E, the codependency is produced by the shared reconfigurable active transistor circuitry 152 (and the one or more shared MEMS structures 111) being used to generate both the PUF output and the RNG output. In particular, any modification of the PUF/RNG circuitry 151 of the device 150 necessarily requires modification to the shared reconfigurable active transistor circuitry 152 and/or the one or more shared MEMS structures 111, and such a modification would result in a change to both the PUF output and the RNG output. By testing the PUF output (for example, as discussed below with respect to FIG. 2), a system that includes the device 150 can verify whether the RNG output is from an untainted source of random numbers. In the particular example shown in FIG. 1E, the source of the PUF output and the source of the RNG output are the same, which can provide a higher level of assurance that the source is valid.

While a single instance of the PUF circuitry 102 and the RNG circuitry 104 is shown in FIGS. 1A-1D for each device 100, 120, 130, 140 and a single instance of the PUF/RNG circuitry 151 for device 150, it should be understood that other configurations are also possible. For example, more than one instance of PUF circuitry 102 and/or more than one instance of RNG circuitry 104 can be included in a single device and the codependency of the various instances of the PUF circuitry 102 and RNG circuitry 104 can be produced through sharing of components in a manner similar to that discussed above. Also, more than one instance of PUF/RNG circuitry 151 can be included in a single device and the codependency of the various instances of the PUF/RNG circuitry 151 can be produced through sharing the shared reconfigurable active transistor circuitry 152 and/or one or more shared MEMS structures 111.

Further, the devices 100, 120, 130, 140, 150 can be standalone devices or integrated into a larger device or system. In examples where the devices 100, 120, 130, 140, 150 are standalone devices, the devices 100, 120, 130, 140, 150 can include additional circuitry beyond that shown in FIGS. 1A-1E for performing additional functions that generate the system input for the devices 100, 120, 130, 140, 150, utilize the random number output for cryptographic processes, and/or utilize the PUF output for cryptographic processes.

In some examples, the outputs of the PUF circuitry 102, the RNG circuitry 104, or the PUF/RNG circuitry 151 are transmitted from a standalone device with authentication codes. The authentication codes can ensure that the numbers generated by the authenticated physical source have not been changed enroute between the standalone device that includes PUF circuitry 102, the RNG circuitry 104, and/or the PUF/RNG circuitry 151 and device(s) that receive or consume the outputs. In some examples, the authenticated random number output and authenticated PUF output are transmitted from the standalone device in an encrypted format, which can preserve the confidentiality of the random number output and PUF output values being transmitted and make is harder to change the values enroute between the standalone device and device(s) that receive or consume the outputs.

FIG. 2 illustrates a flow diagram of an example method 200 of verifying randomness of a random number generator included in a combined PUF/RNG device. The common features discussed above with respect to the example devices 100, 120, 130, 140, 150 in FIGS. 1A-1E can include similar characteristics to those discussed with respect to method 200 and vice versa. In some examples, the blocks of the method 200 are performed by circuit or other components of a system communicatively coupled to the devices 100, 120, 130, 140, 150 discussed above with respect to FIGS. 1A-1E. In other examples, the blocks of the method 200 are performed by a circuit or other components of the devices 100, 120, 130, 140, 150 communicatively coupled to the PUF circuitry 102, the RNG circuitry 104, and/or PUF/RNG circuitry 151, which are not shown in FIGS. 1A-1E for ease of illustration.

The method 200 includes receiving a PUF challenge at a combined PUF/RNG device (block 202). In some examples, receiving a PUF challenge at the combined PUF/RNG device includes inputting the PUF challenge to PUF circuitry include in the combined PUF/RNG device. The PUF circuitry is configured to generate a unique PUF response for a given PUF challenge input.

The method 200 further includes determining a PUF response output by the combined PUF/RNG device in response to the PUF challenge (block 204). In some examples, the PUF circuitry is configured to output the PUF response in response to the PUF challenge. In some examples, the PUF response output from the combined PUF/RNG device includes a series of bits. In other examples, the PUF response output from the combined PUF/RNG device includes a single bit output.

The method 200 further includes determining whether the PUF response output by the combined PUF/RNG device matches a valid PUF response (block 206). In some examples, the valid PUF response for a particular PUF challenge is determined during testing before deployment of the combined PUF/RNG device. In some examples, the PUF responses can include bit errors or variation in the PUF output that is corrected at a later stage. In such examples, the PUF response generated by the PUF circuitry can be determined to match the valid PUF response if it is within a particular threshold range of values that is observable during testing before deployment of the combined PUF/RNG device. The threshold range of a valid PUF response can be determined during testing to include the particular range of values (including bit errors or variation) that is observable during testing before deployment of the combined PUF/RNG device. It should be understood that the breadth of the particular range of values depends on the particular components that make up the combined PUF/RNG device.

The method 200 further includes validating the hardware source(s) of the RNG in response to the PUF response output by the combined PUF/RNG device matching a valid PUF response (block 208). In some examples, validating the hardware source(s) of the RNG includes outputting an indication that the random numbers output by the RNG circuitry are confirmed to be provided from an untainted source. In some examples, if the hardware source(s) of the RNG are validated, the RNG is used for further cryptographic processes performed by the system that includes the combined PUF/RNG device.

The method 200 further includes rejecting the hardware source(s) of the RNG in response to the PUF response output by the combined PUF/RNG device not matching a valid PUF response (block 210). In some examples, rejecting the hardware source(s) of the RNG includes outputting an indication that the random numbers output by the RNG circuitry are likely to be provided from a tainted source or that tampering with the RNG circuitry is detected. In some examples, if the hardware source(s) of the RNG are rejected, the RNG is no longer used for further cryptographic processes performed by the system that includes the combined PUF/RNG device.

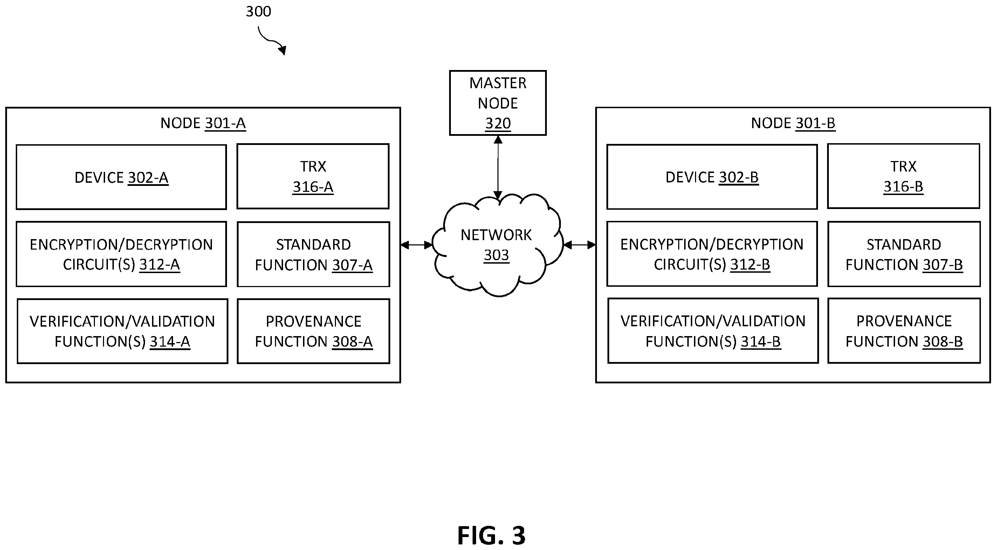

FIG. 3 is a block diagram of a system 300 that includes secure communication between nodes 301 in an exclusive community over a network 303 using a unique component and a random component generated by devices 302 in the nodes 301. Examples of protocols for creating the unique component and the random component from the device are described in more detail herein.

In the example shown in FIG. 3, system 300 is illustrated with two nodes 301 labelled as node 301-A and node 301-B. It is understood that the system 300 may include any appropriate number of nodes 301 and thus the system 300 is not limited to a system with two nodes 301. Further, FIG. 3 illustrates the node 301-A is coupled to the node 301-B over the network 303. It is understood that network 303 may comprise one or more of a wireless access point, comm link, wide area network (WAN), local area network (LAN) such as an Ethernet network, cable group, optical fiber, direct connection, or any other appropriate system for communicatively coupling nodes 301 of system 300.

In the example shown in FIG. 3, the node 301-A and the node 301-B each include similar components for secure communication in the system 300. Therefore, for simplicity and brevity, only the node 301-A is described in detail using reference numerals for each component followed by the designator "-A." It is understood that similar components are also included in the node 301-B identified by the same reference numeral followed by the designator "-B."

In the example shown in FIG. 3, the node 301-A includes a device 302-A. In some examples, the device 302-A can be implemented as device 100, device 120, device 130, device 140, or device 150 as discussed above with respect to FIGS. 1A-1E. In some examples, the device 302-A supports two or more functions for the node 301-A by providing one or more outputs. In some examples, the outputs can include a standard component, a unique component, and a random component. In some examples, the unique component includes a PUF output, and the random component includes one or more random numbers as discussed above.

A first function supported by device 302-A uses the standard component of the outputs from the device 302-A. For example, the device 302-A may comprise a sensor (for example, a MEMS sensor) and the standard component may be a measurement of acceleration, rotation rate, pressure, temperature, airflow, or other measurements associated with the sensor.

A second function supported by device 302-A uses the unique component and/or the random component for secure communication with other nodes 301 of system 300. In some examples, the device 302-A enables harvesting (1) the unique component due to process variations during fabrication that create unique aspects to the device 302-A, and (2) the random component from noise within the device 302-A. In some examples, the unique component and the random component output by the device 302-A can be derived from active transistor circuitry and/or one or more MEMS structures included in the device 302-A.

In some examples, the node 301-A also includes one or more processors and memory for storing software or instructions to implement functions for node 301-A. In the example shown in FIG. 3, the node 301-A includes a standard function 307-A to support the first function of node 301-A. Standard function 307-A uses, among other things, the standard component of outputs of the device 302-A such that node 301-A implements its standard function that is implemented based on outputs of device 302-A.

Also, the node 301-A includes instructions or software to implement the second function of node 301-A. In the example shown in FIG. 3, the node 301-A includes provenance function 308-A, encryption/decryption circuit 312-A, and verification/validation function 314-A. In some examples, the device 302-A is configured to output random numbers from RNG circuitry, and these random numbers are used to produce random numbers used by encryption/decryption circuit 312-A to send and receive data securely over network 303. In some examples, the device 302-A is configured to output a PUF output from PUF circuitry, and the PUF output is used in conjunction with verification/validation function 314-A to implement authentication that data received or transmitted by node 301-A is from an authorized node in system 300. In some examples, the provenance function 308-A uses a unique component from device 302-A to implement a physical unclonable function (PUF) for node 301-A, and the provenance function 308-A is used in conjunction with verification/validation function 314-A to implement authentication that data received or transmitted by node 301-A is from an authorized node in system 300.

In the example shown in FIG. 3, the system 300 also includes a master node 320 that is used to set up the trusted relationship amongst the nodes 301 of system 300 that are in the exclusive community. The master node 320 is communicatively coupled to each of the nodes 301 via the network 303.

In some examples, each respective node 301 generates a number of registries (for example, thousands or tens of thousands of registries) using provenance function 308 and the unique component of outputs of device 302-A of the respective node 301. These registries uniquely identify the specific node 301 as part of the trusted system 300. The master node 320 obtains the registries generated by each node 301 (for example, at the time a node 301 is set up) and provides the registries to all other nodes 301 in system 300. These registries are stored as part of the provenance function 308 of each node 301 in the exclusive community and become, in effect, a library of authorized users in the exclusive community for system 300. By using these registry values, a given node 301 will only recognize data received from like-equipped nodes 301. When data is received over network 303, the receiving node 301 will use the registries in provenance function 308 along with verification/validation function 314 to authenticate the input as originating with an authorized user. For example, the receiving node 301 can verify that the node 301 sending the data has produced an output of a provenance function 308 that corresponds to one of the registries provided by the master node 320 and included in its own provenance function 308.

In other examples, the master node 320 is configured to operate as a certificate authority/certification authority (CA) for applications that use asymmetric cryptography. In such examples, the master node 320 is configured to issue digital certificates to the nodes 301 and the verification/validation function 314 uses the issued digital certificates to authenticate the input as originating with an authorized user.

In the example shown in FIG. 3, the node 301-A also includes a transceiver 316-A that provides an interface for communicating with other nodes 301, e.g., node 301-B, over network 303. While a single transceiver 316-A is shown in FIG. 3, it should be understood that the single transceiver 316-A could be replaced with separate and distinct transmitter and receiver components.

In various aspects, system elements, method steps, or examples described throughout this disclosure (such as the devices, system, or components thereof, for example) may be implemented on one or more computer systems including a central processing unit (CPU), graphics processing unit (GPU), field programmable gate array (FPGA), application specific integrated circuit (ASIC) and/or similar devices comprising hardware executing code to realize those elements, processes, or examples, said code stored on a non-transient data storage device. These devices include or function with software programs, firmware, or other computer readable instructions for carrying out various methods, process tasks, calculations, and control functions.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk-Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

The methods and techniques described here may be implemented, in part, in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs).

Although specific embodiments have been illustrated and described herein, it will be appreciated by those of ordinary skill in the art that any arrangement, which is calculated to achieve the same purpose, may be substituted for the specific embodiments shown within the scope of the appended claims.

## Claims

1. A device (100, 120, 130, 140, 150, 302), comprising:
physical unclonable function, PUF, circuitry (102) configured to produce a PUF response output in response to an input PUF challenge; and
random number generator, RNG, circuitry configured to output one or more random numbers,
wherein the PUF circuitry (102) and the RNG circuitry (104) share one or more components (105) including one or more micro-electromechanical systems, MEMS, structures (111) such that an alteration of the RNG circuitry (104) alters the PUF circuitry (102);
wherein the device (100, 120, 130, 140, 150, 302) is configured to determine whether the RNG circuitry (104) is an untainted source of random numbers based on the PUF response output of the PUF circuitry (102) in response to the PUF challenge;
wherein the PUF response output is separate from the one or more random numbers; and
wherein:
the PUF circuitry (102) includes active transistor PUF circuitry (107) that is used exclusively for the PUF circuitry (102) and is separate from the one or more components (105) shared by the PUF circuitry (102) and the RNG circuitry (104); and/or
the RNG circuitry (104) includes active transistor RNG circuitry (108) that is used exclusively for the RNG circuitry (108) and is separate from the one or more components (105) shared by the PUF circuitry (102) and the RNG circuitry (104).

2. The device (100, 120, 140, 150, 302) of claim 1, wherein the one or more components (105) shared by the PUF circuitry (102) and the RNG circuitry (104) include one or more components of active transistor circuitry (106).

3. The device (100, 120, 130, 140, 150, 302) of claim 1, wherein the one or more components (105) shared by the PUF circuitry (102) and the RNG circuitry (104) include reconfigurable active transistor circuitry (152).

4. The device (100, 120, 130, 140, 150, 302) of any of claims 1-3, wherein noise inherent to the PUF circuitry (102) is used as a seed for the RNG circuitry (104).

5. The device (100, 120, 130, 140, 150, 302) of any of claims 1-4, wherein the device (100, 120, 130, 140, 150, 302) is further configured to:
determine whether the PUF response output of the PUF circuitry (102) matches a valid PUF response for the PUF challenge;
in response to a determination that the PUF response output of the PUF circuitry (102) matches a valid PUF response for the PUF challenge, verify that the RNG circuitry (104) is an untainted source of random numbers; and
in response to a determination that the PUF response output of the PUF circuitry (102) does not match a valid PUF response for the PUF challenge, reject the RNG circuitry (104) as an untainted source of random numbers.

6. A node (300) including the device (100, 120, 130, 140, 150, 302) of any of claims 1-5, the node (300) further comprising one or more additional circuits (308, 312, 314) configured to utilize the PUF response output and/or the one or more random numbers for one or more cryptographic processes.

7. A method, comprising:
receiving a physical unclonable function (PUF) challenge at the device (100, 120, 130, 140, 150, 302) of any of claims 1-5;
determining, with the PUF circuitry of the device, a PUF response output in response to the PUF challenge;
determining whether the PUF response output matches a valid PUF response;
in response to a determination that the PUF response output matches a valid PUF response, validating one or more hardware resources for the RNG circuitry; and
in response to a determination that the PUF response output does not match a valid PUF response, rejecting one or more hardware resources for the RNG circuitry.

## Patentansprüche

1. Vorrichtung (100, 120, 130, 140, 150, 302), umfassend:
eine Schaltung (102) für physikalisch nicht klonbare Funktionen, PUF, die dazu konfiguriert ist, eine PUF-Antwortausgabe als Antwort auf eine eingegebene PUF-Abfrage zu produzieren; und
eine Schaltung eines Zufallszahlengenerators, RNG, die dazu konfiguriert ist, eine oder mehrere Zufallszahlen auszugeben,
wobei die PUF-Schaltung (102) und die RNG-Schaltung (104) eine oder mehrere Komponenten (105) gemeinsam nutzen, einschließlich einer oder mehrerer mikroelektromechanischer Systeme, MEMS, und Strukturen (111), sodass eine Veränderung der RNG-Schaltung (104) auch die PUF-Schaltung (102) verändert;
wobei die Vorrichtung (100, 120, 130, 140, 150, 302) dazu konfiguriert ist, basierend auf der PUF-Antwort, die von der PUF-Schaltung (102) als Antwort auf die PUF-Abfrage ausgegeben wird, zu bestimmen, ob die RNG-Schaltung (104) eine unverfälschte Quelle für Zufallszahlen ist;
wobei die PUF-Antwortausgabe von der einen oder den mehreren Zufallszahlen getrennt ist; und
wobei:
die PUF-Schaltung (102) eine aktive Transistor-PUF-Schaltung (107) beinhaltet, die ausschließlich für die PUF-Schaltung (102) verwendet wird, und von der einen oder den mehreren Komponenten (105) getrennt ist, die die PUF-Schaltung (102) und die RNG-Schaltung (104) gemeinsam nutzen; und/oder
die RNG-Schaltung (104) eine aktive Transistor-RNG-Schaltung (108) beinhaltet, die ausschließlich für die RNG-Schaltung (108) verwendet wird, und von der einen oder den mehreren Komponenten (105) getrennt ist, die die PUF-Schaltung (102) und die RNG-Schaltung (104) gemeinsam nutzen.

2. Vorrichtung (100, 120, 140, 150, 302) nach Anspruch 1, wobei die eine oder mehreren Komponenten (105), die von der PUF-Schaltung (102) und der RNG-Schaltung (104) gemeinsam genutzt werden, eine oder mehrere Komponenten einer aktiven Transistorschaltung (106) beinhalten.

3. Vorrichtung (100, 120, 130, 140, 150, 302) nach Anspruch 1, wobei die eine oder mehreren Komponenten (105), die von der PUF-Schaltung (102) und der RNG-Schaltung (104) gemeinsam genutzt werden, eine rekonfigurierbare aktive Transistorschaltung (152) beinhalten.

4. Vorrichtung (100, 120, 130, 140, 150, 302) nach einem der Ansprüche 1 bis 3, wobei das der PUF-Schaltung (102) inhärente Rauschen als Startwert für die RNG-Schaltung (104) verwendet wird.

5. Vorrichtung (100, 120, 130, 140, 150, 302) nach einem der Ansprüche 1 bis 4, wobei die Vorrichtung (100, 120, 130, 140, 150, 302) ferner dazu konfiguriert ist:
Bestimmen, ob die PUF-Antwortausgabe der PUF-Schaltung (102) mit einer gültigen PUF-Antwort auf die PUF-Abfrage übereinstimmt;
als Antwort auf eine Bestimmung, dass die PUF-Antwortausgabe der PUF-Schaltung (102) mit einer gültigen PUF-Antwort auf die PUF-Abfrage übereinstimmt, zu verifizieren, dass die RNG-Schaltung (104) eine unverfälschte Quelle für Zufallszahlen ist; und
als Antwort auf eine Bestimmung, dass die PUF-Antwortausgabe der PUF-Schaltung (102) nicht mit einer gültigen PUF-Antwort auf die PUF-Abfrage übereinstimmt, Ablehnen der RNG-Schaltung (104) als unverfälschte Quelle für Zufallszahlen.

6. Knoten (300), der die Vorrichtung (100, 120, 130, 140, 150, 302) nach einem der Ansprüche 1 bis 5 beinhaltet, wobei der Knoten (300) ferner eine oder mehrere zusätzliche Schaltungen (308, 312, 314) umfasst, die dazu konfiguriert sind, die PUF-Antwortausgabe und/oder die eine oder mehreren Zufallszahlen für einen oder mehrere kryptografische Prozesse zu verwenden.

7. Verfahren, umfassend:
Empfangen einer Abfrage für physikalisch nicht klonbare Funktionen (PUF) an der Vorrichtung (100, 120, 130, 140, 150, 302) nach einem der Ansprüche 1 bis 5;
Bestimmen mit der PUF-Schaltung der Vorrichtung, einer PUF-Antwortausgabe als Antwort auf die PUF-Abfrage;
Bestimmen, ob die PUF-Antwortausgabe mit einer gültigen PUF-Antwort übereinstimmt;
als Antwort auf eine Bestimmung, dass die PUF-Antwortausgabe mit einer gültigen PUF-Antwort übereinstimmt, Validieren einer oder mehrerer Hardware-Ressourcen für die RNG-Schaltung; und
als Antwort auf eine Bestimmung, dass die PUF-Antwortausgabe nicht mit einer gültigen PUF-Antwort übereinstimmt, Ablehnen einer oder mehrerer Hardware-Ressourcen für die RNG-Schaltung.

## Revendications

1. Dispositif (100, 120, 130, 140, 150, 302), comprenant :
une circuiterie de fonction physique non clonable, PUF (102), configurée pour produire une sortie de réponse de PUF en réponse à un stimulus d'entrée de PUF ; et
une circuiterie de générateur de nombres aléatoires, RNG, configurée pour produire un ou plusieurs nombres aléatoires,
dans lequel la circuiterie de PUF (102) et la circuiterie de RNG (104) partagent un ou plusieurs composants (105) incluant une ou plusieurs structures de systèmes micro-électromécaniques, MEMS (111), de sorte qu'une altération de la circuiterie de RNG (104) altère la circuiterie de PUF (102) ;
dans lequel le dispositif (100, 120, 130, 140, 150, 302) est configuré pour déterminer si la circuiterie de RNG (104) est une source non compromise de nombres aléatoires sur la base de la sortie de réponse de PUF de la circuiterie de PUF (102) en réponse au stimulus de PUF ;
dans lequel la sortie de réponse de PUF est distincte des un ou plusieurs nombres aléatoires ; et
dans lequel :
la circuiterie de PUF (102) inclut une circuiterie de PUF à transistors actifs (107) qui est utilisée exclusivement pour la circuiterie de PUF (102) et est distincte des un ou plusieurs composants (105) partagés par la circuiterie de PUF (102) et la circuiterie de RNG (104) ; et/ou
la circuiterie de RNG (104) inclut une circuiterie de RNG à transistors actifs (108) qui est utilisée exclusivement pour la circuiterie de RNG (108) et est distincte des un ou plusieurs composants (105) partagés par la circuiterie de PUF (102) et la circuiterie de RNG (104).

2. Dispositif (100, 120, 140, 150, 302) selon la revendication 1, dans lequel les un ou plusieurs composants (105) partagés par la circuiterie de PUF (102) et la circuiterie de RNG (104) incluent un ou plusieurs composants de circuiterie à transistors actifs (106).

3. Dispositif (100, 120, 130, 140, 150, 302) selon la revendication 1, dans lequel les un ou plusieurs composants (105) partagés par la circuiterie de PUF (102) et la circuiterie de RNG (104) incluent une circuiterie à transistors actifs reconfigurable (152).

4. Dispositif (100, 120, 130, 140, 150, 302) selon l'une quelconque des revendications 1 à 3, dans lequel le bruit inhérent à la circuiterie de PUF (102) est utilisé comme graine pour la circuiterie de RNG (104).

5. Dispositif (100, 120, 130, 140, 150, 302) selon l'une quelconque des revendications 1 à 4, dans lequel le dispositif (100, 120, 130, 140, 150, 302) est en outre configuré pour :
déterminer si la sortie de réponse de PUF de la circuiterie de PUF (102) correspond à une réponse de PUF valide pour le stimulus de PUF ;
en réponse à la détermination que la sortie de réponse de PUF de la circuiterie de PUF (102) correspond à une réponse de PUF valide pour le stimulus de PUF, vérifier que la circuiterie de RNG (104) est une source non compromise de nombres aléatoires ; et
en réponse à la détermination que la sortie de réponse de PUF de la circuiterie de PUF (102) ne correspond pas à une réponse de PUF valide pour le stimulus de PUF, rejeter la circuiterie de RNG (104) en tant que source non compromise de nombres aléatoires.

6. Nœud (300) incluant le dispositif (100, 120, 130, 140, 150, 302) selon l'une quelconque des revendications 1 à 5, le nœud (300) comprenant en outre une ou plusieurs circuiteries supplémentaires (308, 312, 314) configurées pour utiliser la sortie de réponse de PUF et/ou les un ou plusieurs nombres aléatoires pour un ou plusieurs processus cryptographiques.

7. Procédé, comprenant :
la réception d'un stimulus de fonction physique non clonable (PUF) au niveau du dispositif (100, 120, 130, 140, 150, 302) selon l'une quelconque des revendications 1 à 5 ;
la détermination, avec la circuiterie de PUF du dispositif, d'une sortie de réponse de PUF en réponse au stimulus de PUF ;
la détermination du fait que la sortie de réponse de PUF correspond ou non à une réponse de PUF valide ;
en réponse à une détermination que la sortie de réponse de PUF correspond à une réponse de PUF valide, la validation d'une ou plusieurs ressources matérielles pour la circuiterie de RNG ; et
en réponse à une détermination que la sortie de réponse de PUF ne correspond pas à une réponse de PUF valide, le rejet des une ou plusieurs ressources matérielles pour la circuiterie de RNG.
